# EUROPÄISCHE PATENTANMELDUNG

(11) **EP 2 606 999 A1**
(43) Veröffentlichungstag der Anmeldung: **26.06.2013**
(21) Anmeldenummer: 12193345.1
(22) Anmeldetag: 20.11.2012
(51) Int. Cl.: B23B 49/02, B25H 1/00

(54) **Bohrhilfe zur Führung eines Bohrwerkzeuges mit einer Positioniereinrichtung und Verfahren zum Positionieren der Bohrhilfe auf einem zu bearbeitenden Untergrund**

(30) Priorität: 23.12.2011 DE 102011089746
(71) Anmelder: HILTI Aktiengesellschaft, 9494 Schaan (LI)
(72) Erfinder: Günther, Joachim, 86916 Kaufering (DE); Griessinger, Oliver, 6840 Götzis (AT); Melzer, Bert, 28816 Stuhr (DE)

(57) **Zusammenfassung**

Bohrhilfe (1) zur Führung eines Bohrwerkzeuges (2) entlang einer Bohrrichtung (5) aufweisend eine Befestigungseinrichtung (6) zur Befestigung der Bohrhilfe (1) an einem zu bearbeitenden Untergrund (9a-9d), eine Führungseinrichtung (7) mit einem Aufnahmeelement (12), das mit der Befestigungseinrichtung (6) verbunden ist, und einem Führungseinsatz (13; 31 a-31 c), der in das Aufnahmeelement (12) einsetzbar und zur Führung des Bohrwerkzeuges (2) entlang der Bohrrichtung (5) ausgebildet ist, wobei eine Positioniereinrichtung (32), die in das Aufnahmeelement (12) einsetzbar ist, vorgesehen ist.

## Beschreibung

### Technisches Gebiet

Die vorliegende Erfindung betrifft eine Bohrhilfe zur Führung eines Bohrwerkzeuges gemäß dem Oberbegriff des Anspruchs 1 sowie ein Verfahren zum Positionieren der Bohrhilfe auf einem zu bearbeitenden Untergrund gemäß dem Oberbegriff des Anspruchs 8.

### Stand der Technik

Bekannte Bohrhilfen zur Führung eines Bohrwerkzeuges entlang einer Bohrrichtung umfassen eine Befestigungseinrichtung zur Befestigung der Bohrhilfe an einem zu bearbeitenden Untergrund, sowie eine Führungseinrichtung mit einem Aufnahmeelement, das mit der Befestigungseinrichtung verbunden ist, und einem Führungseinsatz, der in das Aufnahmeelement einsetzbar und zur Führung des Bohrwerkzeuges entlang der Bohrrichtung ausgebildet ist. Die Bohrhilfen umfassen in der Regel mehrere Führungseinsätze, die sich in einem Innendurchmesser voneinander unterscheiden. Der Innendurchmesser des Führungseinsatzes ist im Wesentlichen durch den Durchmesser des Bohrwerkzeuges festgelegt und für jeden Durchmesser des Bohrwerkzeuges ist ein Führungseinsatz vorgesehen. Der Außendurchmesser der Führungseinsätze ist gleich und entspricht dem Innendurchmesser des Aufnahmeelementes, in das die Führungseinsätze eingesetzt werden.

Um die Bohrhilfe auf dem zu bearbeitenden Untergrund zu positionieren, bringt der Anwender auf dem Untergrund eine Markierung an, die in der Regel die Mitte des Bohrloches anzeigt. Die Markierung, die mit Bleistift oder einem anderen geeigneten Markierungsmittel angebracht wird, wird möglichst klein gewählt, um die Nacharbeit beim Entfernen der Markierungen zu reduzieren. Beispielsweise sind Rückstände von Bleistiftmarkierungen auf rauen Fliesen schwer zu entfernen. Die bekannten Bohrhilfen weisen Markierungshilfen in Form von Linien oder Pfeilen auf, die den Bediener beim Positionieren der Bohrhilfe unterstützen. Die Markierungshilfen sind auf der Innenseite der Führungseinsätze oder auf der Außenseite des Aufnahmeelementes angebracht.

Bohrhilfen, bei denen die Markierungshilfen an der Außenseite des Aufnahmeelementes angebracht sind, weisen den Nachteil auf, dass die Markierung, die der Anwender auf dem Untergrund anbringen muss, größer als der Außendurchmesser des Aufnahmeelementes sein muss, so dass Nacharbeit beim Entfernen der Markierungen entsteht. Der Nachteil der bekannten Bohrhilfen mit Führungseinsätzen, die eine integrierte Markierhilfe aufweisen, besteht darin, dass die auf dem zu bearbeitenden Untergrund vorhandene Markierung für den Anwender beim Positionieren der Bohrhilfe schlecht sichtbar sein kann. Dieses Problem nimmt mit abnehmendem Innendurchmesser des Führungseinsatzes zu, so dass vor allem bei kleinen Durchmessern des Bohrwerkzeuges Fehler beim Positionieren der Bohrhilfe auftreten können.

### Darstellung der Erfindung

Die Aufgabe der vorliegenden Erfindung besteht demgegenüber darin, eine Bohrhilfe zur Führung eines Bohrwerkzeuges und ein Verfahren zum Positionieren der Bohrhilfe auf einem zu bearbeitenden Untergrund dahingehend weiter zu entwickeln, dass die Genauigkeit beim Positionieren der Bohrhilfe für alle gängigen Durchmesser der Bohrwerkzeuge erhöht ist und gleichzeitig der Aufwand für Nacharbeiten reduziert ist.

Diese Aufgabe wird bei der eingangs genannten Bohrhilfe zur Führung eines Bohrwerkzeuges erfindungsgemäß durch die Merkmale des unabhängigen Anspruchs 1 und bei dem eingangs genannten Verfahren zur Positionierung der erfindungsgemäßen Bohrhilfe auf einem zu bearbeitenden Untergrund durch die Merkmale des unabhängigen Anspruchs 8 gelöst. Vorteilhafte Weiterbildungen sind in den abhängigen Ansprüchen angegeben.

Die Bohrhilfe ist erfindungsgemäß dadurch gekennzeichnet, dass eine Positioniereinrichtung vorgesehen ist, die eine Markierhilfe aufweist und in das Aufnahmeelement der Führungseinrichtung einsetzbar ist. Die erfindungsgemäße Bohrhilfe ermöglicht dem Anwender ein exaktes Positionieren der Bohrhilfe unabhängig vom Durchmesser des Bohrwerkzeuges ohne Nacharbeit beim Entfernen von Markierungen auf dem zu bearbeitenden Untergrund. Die Abmessungen der Führungseinsätze, insbesondere der Innendurchmesser, sind durch die Durchmesser der Bohrwerkzeuge festgelegt und können nicht im Hinblick auf gute Bedingungen beim Positionieren optimiert werden. Der Vorteil einer Positioniereinrichtung, die in das Aufnahmeelement einsetzbar ist, liegt darin, dass die Positioniereinrichtung nur während der Positionierung der Bohrhilfe auf dem zu bearbeitenden Untergrund in das Aufnahmeelement eingesetzt ist, so dass die Abmessungen der Positioniereinrichtung optimal an die Bedingungen beim Positionieren angepasst werden können. Der Durchmesser der Positioniereinrichtung wird beispielsweise so groß gewählt, dass möglichst viel Licht auf die Bearbeitungsstelle trifft und der Bediener eine Markierung gut auf dem Untergrund erkennen kann.

Die Höhe der Positioniereinrichtung wird so gewählt, dass der Bediener die Positioniereinrichtung einfach einsetzen und herausnehmen kann.

Die Positioniereinrichtung ist bevorzugt als Grundkörper mit einem ersten Abschnitt, der dem zu bearbeitenden Untergrund zugewandt ist, und einem zweiten Abschnitt, der dem zu bearbeitenden Untergrund abgewandt ist, ausgebildet. Dabei sind der erste und zweite Abschnitt besonders bevorzugt durch einen Absatz voneinander getrennt. Die Positioniereinrichtung wird in das Aufnahmeelement gesteckt, bis der Absatz an einer Stufe des Aufnahmeelementes anschlägt. Diese Ausgestaltung stellt sicher, dass die Positioniereinrichtung den zu bearbeitenden Untergrund nicht berührt und keine Kratzer oder sonstigen Beschädigungen erzeugt. Außerdem ist die exakte Ausrichtung der Positioniereinrichtung sichergestellt.

Die Positioniereinrichtung weist bevorzugt mindestens eine Lichtöffnung auf. Die Lichtöffnungen in der Positioniereinrichtung sorgen für einen zusätzlichen Lichteinfall auf die Bearbeitungsstelle, was das genaue Positionieren für den Bediener erleichtert und Fehler beim Positionieren der Bohrhilfe reduziert.

Besonders bevorzugt weist die Positioniereinrichtung mehrere Lichtöffnungen auf, die symmetrisch um eine Drehachse parallel zur Bohrrichtung des Bohrwerkzeuges angeordnet sind. Je mehr Lichtöffnungen in der Positioniereinrichtung vorhanden sind, umso besser ist die Bearbeitungsstelle für den Bediener sichtbar. Eine symmetrische Anordnung der Lichtöffnungen sorgt für eine gleichmäßige Ausleuchtung der Bearbeitungsstelle.

In einer bevorzugten Ausführung ist die Positioniereinrichtung im Aufnahmeelement der Führungseinrichtung um eine Drehachse parallel zur Bohrrichtung drehbar ausgebildet. Eine drehbare Positioniereinrichtung hat den Vorteil, dass die Positioniereinrichtung so gedreht werden kann, dass die Markierhilfe mit den Markierungen auf dem zu bearbeitenden Untergrund übereinstimmt, ohne dass die gesamte Bohrhilfe gedreht werden müsste.

In einer bevorzugten Ausführung weist die Positioniereinrichtung ein Greifelement auf. Das Greifelement erleichtert das Einsetzen der Positioniereinrichtung in das Aufnahmeelement und das Herausnehmen der Positioniereinrichtung aus dem Aufnahmeelement.

Das Verfahren zum Positionieren der erfindungsgemäßen Bohrhilfe auf einem zu bearbeitenden Untergrund weist die Schritte auf: Einsetzen der Positioniereinrichtung in das Aufnahmeelement, Ausrichten der Positioniereinrichtung auf dem zu bearbeitenden Untergrund, Entnehmen der Positioniereinrichtung aus dem Aufnahmeelement und Einsetzen des Führungseinsatzes in das Aufnahmeelement.

Um das Aufnahmeelement auf dem Untergrund gut positionieren zu können, ist es vorteilhaft, wenn das Aufnahmeelement relativ zur Befestigungseinrichtung verstellbar ausgebildet ist. Die Befestigungseinrichtung wird auf dem zu bearbeitenden Untergrund befestigt und eine Feststelleinrichtung, die das Aufnahmeelement an der Befestigungseinrichtung fixiert, wird gelöst, so dass das Aufnahmeelement zur Befestigungseinrichtung verstellbar ist. Die Positioniereinrichtung wird in das Aufnahmeelement eingesetzt und das Aufnahmeelement mit Hilfe der Positioniereinrichtung exakt zur Markierung positioniert. Anschließend wird die Feststelleinrichtung angezogen und das Aufnahmeelement fixiert. Nach dem Positionieren wird die Positioniereinrichtung aus dem Aufnahmeelement entnommen und der passende Führungseinsatz in das Aufnahmeelement eingesetzt.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Bohrhilfe zur Führung eines Bohrwerkzeuges, die auf einem zu bearbeitenden Untergrund befestigt ist, aufweisend eine Befestigungseinrichtung und eine Führungseinrichtung mit einem Aufnahmeelement und einem Führungseinsatz, der in das Aufnahmeelement eingesetzt ist;
- FIG. 2: die Bohrhilfe der FIG. 1 mit drei Führungseinsätzen für verschiedene Bohrwerkzeuge und einer Positioniereinrichtung zum Positionieren der Bohrhilfe, wobei die Führungseinsätze und die Positioniereinrichtung nicht in das Aufnahmeelement eingesetzt sind;
- FIG. 3A-C: die Bohrhilfe der FIG. 1 mit eingesetzter Positioniereinrichtung in einer dreidimensionalen Ansicht (FIG. 3A), in einem Längsschnitt durch das Aufnahmeelement parallel zur Bohrrichtung (FIG. 3B) und in einer Draufsicht auf die Bearbeitungsstelle und die Positioniereinrichtung (FIG. 3C).

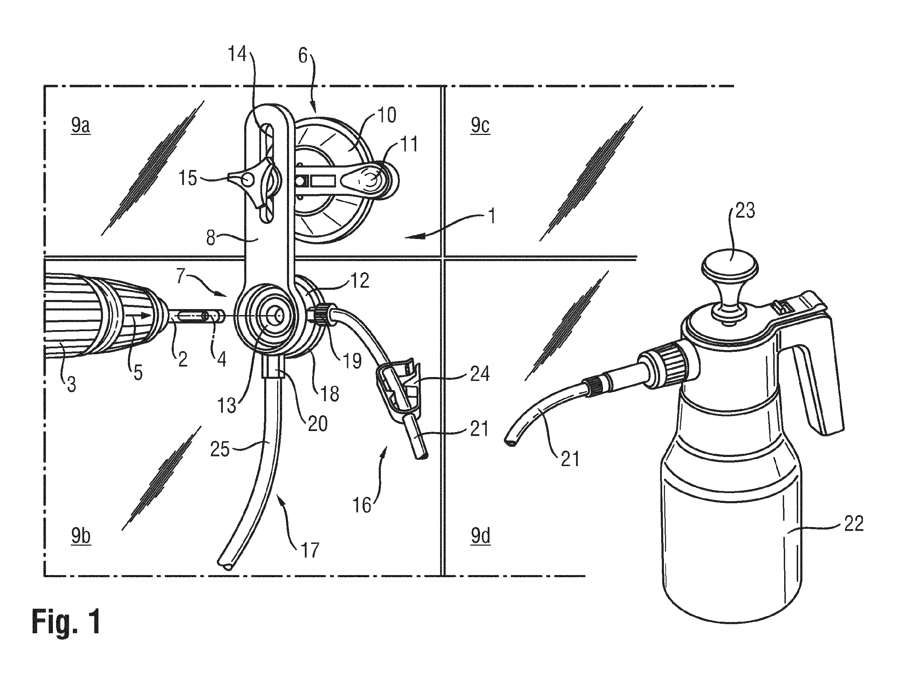

FIG. 1 zeigt eine erfindungsgemäße Bohrhilfe 1 zur Führung eines Bohrwerkzeuges 2 während der Bearbeitung. Das Bohrwerkzeug 2 wird von einer handgeführten Werkzeugmaschine 3 durch Drehung um eine Drehachse **4** angetrieben und entlang einer Bohrrichtung **5** bewegt.

Die Bohrhilfe 1 umfasst eine Befestigungseinrichtung **6** zur Befestigung der Bohrhilfe 1 an einem zu bearbeitenden Untergrund, eine Führungseinrichtung **7** zur Führung des Bohrwerkzeuges 2 während der Bearbeitung und ein Verbindungselement **8,** das die Befestigungseinrichtung 6 mit der Führungseinrichtung 7 verbindet. Der zu bearbeitende Untergrund ist in der Ausführung der FIG. 1 als Fliesenuntergrund ausgebildet, wobei vier Fliesen **9a, 9b, 9c, 9d** zumindest teilweise gezeigt sind.

Die Befestigungseinrichtung 6 weist einen Saugnapf **10** auf, dessen Saugwirkung mittels eines Klemmhebels **11** am Untergrund erzeugt wird. Die Führungseinrichtung 7 besteht aus einem Aufnahmeelement **12** und einem Führungseinsatz **13,** der in das Aufnahmeelement 12 eingesetzt ist und zur Führung des Bohrwerkzeuges 2 entlang der Bohrrichtung 5 dient. Das Verbindungselement 8, das die Befestigungseinrichtung 6 und die Führungseinrichtung 7 verbindet, ist als länglicher Haltearm ausgebildet, wobei die Befestigungseinrichtung 6 am Haltearm 7 verstellbar ist. Im Haltearm 8 ist ein Langloch **14** vorgesehen, in dem eine Feststellschraube **15** geführt ist. Bei gelöster Feststellschraube 15 ist der Haltearm 8 in Richtung des Langloches 14 verstellbar und durch Festziehen der Feststellschraube wird der Haltearm 8 im Langloch 14 fixiert. Die Verstellbarkeit der Befestigungseinrichtung 6 längs des Langloches 14 hat den Vorteil, dass die Position der Befestigungseinrichtung 6 auf dem Untergrund verändert werden kann. Der Saugnapf 10 kann auf einer Fuge zwischen zwei Fliesen nur eine geringe Saugwirkung entfalten. Durch die Verstellmöglichkeit kann der Saugnapf 10 vollflächig auf einer Fliese positioniert und eine ausreichende Saugwirkung erzeugt werden.

Um das Bohrwerkzeug 2 während der Bearbeitung zu kühlen und die Flüssigkeit abzuleiten, ist die Bohrhilfe 1 mit einer Zuführeinrichtung **16** und einer Abführeinrichtung **17** verbunden.

Die Bohrhilfe 1 weist neben der Befestigungseinrichtung 6 und der Führungseinrichtung 7 eine Wasserkammer **18** auf, die die Bearbeitungsstelle vollständig umgibt. Die Wasserkammer 18 ist beispielsweise untergrundseitig offen ausgebildet und mittels eines Dichtelementes zum Untergrund abgedichtet.

Die Wasserkammer 18 umfasst eine Eingangsöffnung **19** zur Zufuhr der Kühl- und Spülflüssigkeit und eine Ausgangsöffnung **20** zur Abfuhr der erwärmten und verschmutzten Kühl - und Spülflüssigkeit, die als Schmutzflüssigkeit bezeichnet wird. Die Eingangsöffnung 19 ist über eine Zuleitung **21** mit einem Flüssigkeitsbehälter **22,** der mit der Kühl- und Spülflüssigkeit gefüllt ist, verbunden. Der Flüssigkeitsbehälter 22 ist in der Ausführung der FIG. 1 als Druckflasche mit einem Pumpmechanismus **23** ausgebildet. Durch Betätigen des Pumpmechanismus 23 wird in der Druckflasche 22 ein Überdruck erzeugt. Um die Flüssigkeitszufuhr aus dem Flüssigkeitsbehälter 22 in die Wasserkammer 18 einzustellen, weist die Zuleitung 21 eine Reguliereinrichtung **24** auf. Die Ausgangsöffnung 20 der Wasserkammer 18 ist über eine Ableitung **25** beispielsweise mit einer Absaugeinrichtung in Form eines Staubsaugers verbunden.

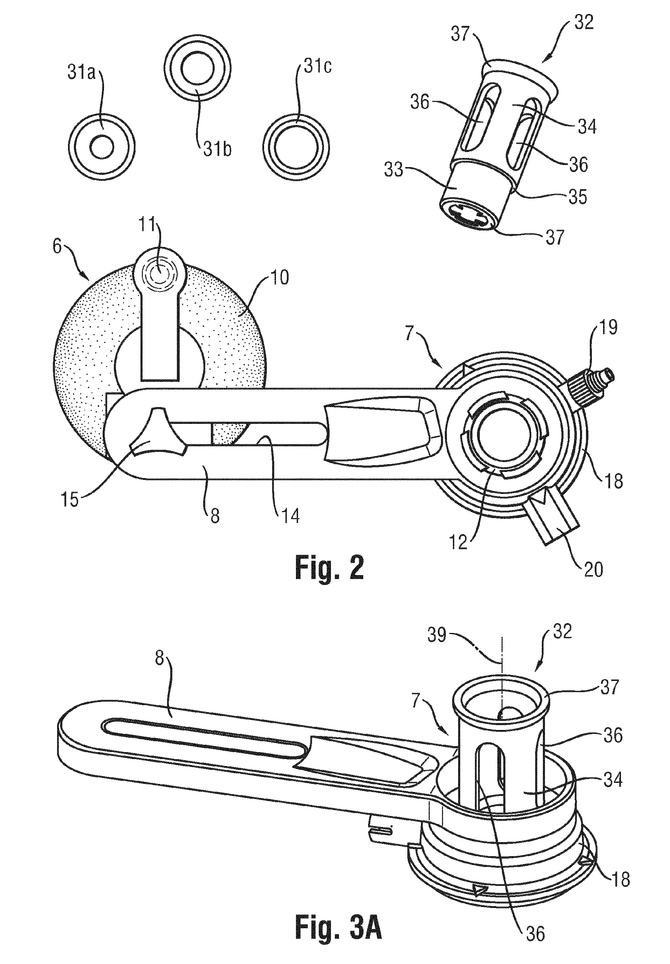

**FIG. 2** zeigt die erfindungsgemäße Bohrhilfe 1 der FIG. 1 mit drei verschiedenen Führungseinsätzen **31** a, **31 b, 31 c** und einer Positioniereinrichtung **32.** Dabei sind weder die Führungseinsätze 31 a-31 c noch die Positioniereinrichtung 32 in das Aufnahmeelement 12 der Führungseinrichtung 7 eingesetzt. Die Führungseinsätze 31 a-31 c sind zylinderförmig ausgebildet und weisen denselben Außendurchmesser auf. Die Innendurchmesser der Führungseinsätze 31 a-31 c unterscheiden sich voneinander und sind an die Durchmesser verschiedener Bohrwerkzeuge 2 angepasst. Dabei entspricht der Führungseinsatz 31a dem kleinsten Durchmesser und der Führungseinsatz 31 c dem größten Durchmesser.

Das Aufnahmeelement 12 der Führungseinrichtung 7 und das Verbindungselement 8 sind einteilig als Kunststoffteil ausgebildet. Das Aufnahmeelement 12 ist in Bohrrichtung 5 zumindest abschnittsweise zylinderförmig ausgebildet und weist einen Innendurchmesser auf, der im Wesentlichen dem Außendurchmesser der Führungseinsätze 31 a-31 c und der Positioniereinrichtung 32 entspricht.

Die Positioniereinrichtung 32 ist als zylinderförmiger Grundkörper bestehend aus einem ersten Abschnitt **33,** der im eingesetzten Zustand dem zu bearbeitenden Untergrund zugewandt ist, und einem zweiten Abschnitt **34,** der dem zu bearbeitenden Untergrund abgewandt ist, ausgebildet. Der erste und zweite Abschnitt 33, 34 weisen verschiedene Außendurchmesser auf, so dass sich zwischen den Abschnitten 33, 34 ein Absatz **35** ausbildet. Im zweiten Abschnitt 34 der Positioniereinrichtung 32 sind mehrere Lichtöffnungen **36** vorgesehen, über die Licht auf die Bearbeitungsstelle auftrifft. Am Ende des zweiten Abschnitts 34 ist ein als Greifring 37 ausgebildetes Greifelement angeordnet, das das Einsetzen und Herausnehmen der Positioniereinrichtung 32 erleichtert. Am ersten Abschnitt 33 der Positioniereinrichtung 32 ist eine als Positionierkreuz **38** ausgebildete Markierhilfe angeordnet, die eine genaue Positionierung der Bohrhilfe 1 auf dem zu bearbeitenden Untergrund ermöglicht.

Da die Positioniereinrichtung 32 nur während der Positionierung der Bohrhilfe 1 auf dem zu bearbeitenden Untergrund eingesetzt wird, können die Abmessungen der Positioniereinrichtung 32 optimal an die Positionierungsaufgabe angepasst werden. Der Durchmesser der Positioniereinrichtung 32 wird so gewählt, dass möglichst viel Licht auf die Bearbeitungsstelle trifft, so dass der Bediener eine auf dem zu bearbeitenden Untergrund vorhandene Markierung erkennen kann. Die Abmessungen der Positioniereinrichtung 32 werden so gewählt, dass der Bediener die Positioniereinrichtung 32 einfach einsetzen und herausnehmen kann. Die Lichtöffnungen 36 in der Positioniereinrichtung 32 sorgen für einen zusätzlichen Lichteinfall und der Greifring 37 erleichtert das Einsetzen und Herausnehmen der Positioniereinrichtung 32.

Das Aufnahmeelement 12, die Führungseinsätze 31 a-31 c und die Positioniereinrichtung 32 der Bohrhilfe 1 sind in der Ausführung der FIG. 1 zylinderförmig ausgebildet. Alternativ kann jede andere Geometrie gewählt werden, wobei die Außengeometrie der Führungseinsätze und der Positioniereinrichtung an die Innengeometrie des Aufnahmeelementes angepasst sein müssen. Die zylinderförmige Geometrie hat den Vorteil, dass die Positioniereinrichtung im eingesetzten Zustand drehbar ist.

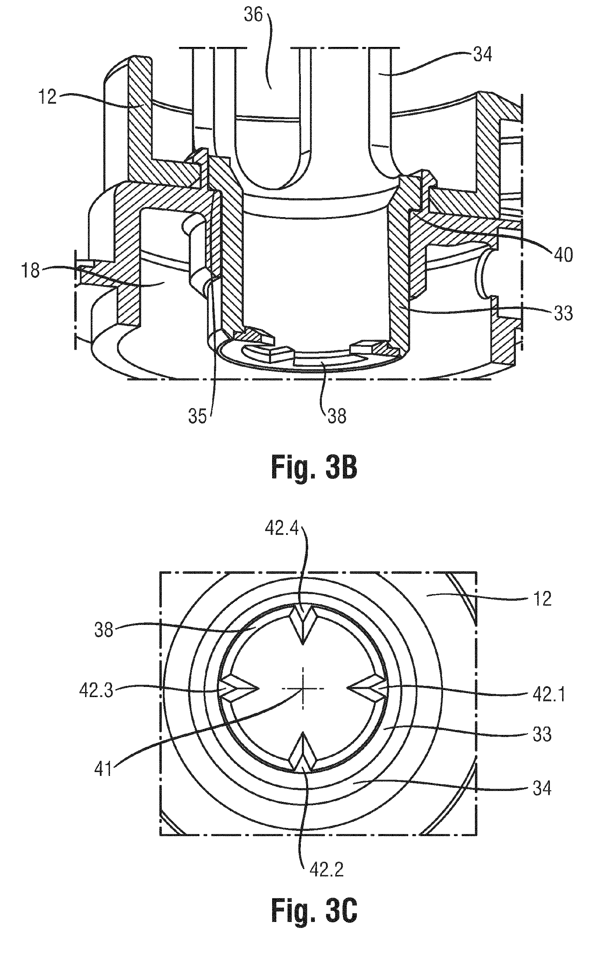

FIG. 3A-C zeigen die Positioniereinrichtung 32 der FIG. 2, die in das Aufnahmeelement 12 eingesetzt ist. Dabei zeigt FIG. 3A eine dreidimensionale Ansicht, FIG. 3B einen Längsschnitt durch das Aufnahmeelement 12 und die Positioniereinrichtung 32 parallel zur Bohrrichtung und FIG. 3C eine Draufsicht auf die Bearbeitungsstelle und die Positioniereinrichtung 32.

FIG. 3A zeigt das Aufnahmeelement 12 der Führungseinrichtung 7 mit der eingesetzten Positioniereinrichtung 32. Die Positioniereinrichtung 32 ist um eine Drehachse 39, die parallel zur Bohrrichtung 5 des Bohrwerkzeuges 2 verläuft, drehbar ausgebildet. Beim Positionieren der Bohrhilfe 1 wird die Positioniereinrichtung 32 um die Drehachse 39 gedreht, bis das Positionierkreuz 38 und die Markierung übereinstimmen.

FIG. 3B zeigt einen Längsschnitt durch die Positioniereinrichtung 32 und das Aufnahmeelement 12, wobei die Schnittrichtung parallel zur Bohrrichtung 5 des Bohrwerkzeuges 2 verläuft. Der erste und zweite Abschnitt 33, 34 der Positioniereinrichtung 32 sind durch den Absatz 35 voneinander getrennt. Im Aufnahmeelement 12 ist eine Stufe **40** ausgebildet, die beim Einsetzen der Positioniereinrichtung 32 als Anschlag dient. Die Länge des ersten Abschnittes 33 ist so gewählt, dass zwischen dem Positionierkreuz 38 und dem Untergrund ein Spalt entsteht und das Positionierkreuz 38 den Untergrund nicht berührt.

FIG. 3C zeigt eine Draufsicht auf die Bearbeitungsstelle und die in das Aufnahmeelement 12 eingesetzte Positioniereinrichtung 32. Der Bediener hat die Mitte des Bohrloches mit einer Markierung **41** markiert. Das Positionierkreuz 38 besteht aus vier Pfeilspitzen **42.1-42.4,** deren Verlängerungen sich in einem Mittelpunkt schneiden.

## Patentansprüche

1. Bohrhilfe (1) zur Führung eines Bohrwerkzeuges (2) entlang einer Bohrrichtung (5) aufweisend
eine Befestigungseinrichtung (6) zur Befestigung der Bohrhilfe (1) an einem zu bearbeitenden Untergrund (9a-9d),
eine Führungseinrichtung (7) mit einem Aufnahmeelement (12), das mit der Befestigungseinrichtung (6) verbunden ist, und mindestens einem Führungseinsatz (13; 31 a-31 c), der in das Aufnahmeelement (12) einsetzbar und zur Führung des Bohrwerkzeuges (2) entlang der Bohrrichtung (5) ausgebildet ist,
**dadurch gekennzeichnet, dass**
eine Positioniereinrichtung (32), die eine Markierungshilfe (37) aufweist und in das Aufnahmeelement (12) einsetzbar ist, vorgesehen ist.

2. Bohrhilfe nach Anspruch 1, **dadurch gekennzeichnet, dass** die Positioniereinrichtung (32) als Grundkörper mit einem ersten Abschnitt (33), der dem zu bearbeitenden Untergrund (9a-9d) zugewandt ist, und einem zweiten Abschnitt (34), der dem zu bearbeitenden Untergrund (9a-9d) abgewandt ist, ausgebildet ist.

3. Bohrhilfe nach Anspruch 2, **dadurch gekennzeichnet, dass** der erste Abschnitt (33) und der zweite Abschnitt (33, 34) durch einen Absatz (35) voneinander getrennt sind.

4. Bohrhilfe nach einem der Ansprüche 1 bis 3, **dadurch gekennzeichnet, dass** die Positioniereinrichtung (32) mindestens eine Lichtöffnung (36) aufweist.

5. Bohrhilfe nach Anspruch 4, **dadurch gekennzeichnet, dass** die Positioniereinrichtung (32) mehrere Lichtöffnungen (36) aufweist, wobei die Lichtöffnungen (36) symmetrisch um eine Drehachse (39) parallel zur Bohrrichtung (5) angeordnet sind.

6. Bohrhilfe nach einem der Ansprüche 1 bis 5, **dadurch gekennzeichnet, dass** die Positioniereinrichtung (32) im Aufnahmeelement (12) um eine Drehachse (39) parallel zur Bohrrichtung (5) drehbar ausgebildet ist.

7. Bohrhilfe nach einem der Ansprüche 1 bis 6, **dadurch gekennzeichnet, dass** die Positioniereinrichtung (32) ein Greifelement (37) zum Einsetzen und Entnehmen der Positioniereinrichtung (32) aufweist.

8. Verfahren zum Positionieren der Bohrhilfe (1) nach einem der Ansprüche 1 bis 7 auf einem zu bearbeitenden Untergrund (9a-9d), mit den Schritten
Einsetzen der Positioniereinrichtung (32) in das Aufnahmeelement (12),
Ausrichten der Positioniereinrichtung (32) auf dem Untergrund (9a-9d), Entnehmen der Positioniereinrichtung (32) aus dem Aufnahmeelement (12) und Einsetzen des Führungseinsatzes (13; 31 a-31 c) in das Aufnahmeelement (12).
